# EUROPÄISCHE PATENTSCHRIFT

(11) **EP 0 557 248 B1**
(45) Veröffentlichungstag und Bekanntmachung des Hinweises auf die Patenterteilung: **14.08.1996**
(21) Anmeldenummer: 93810094.8
(22) Anmeldetag: 01.06.1990
(51) Int. Cl.: B23Q 3/06, B25B 1/24

(54) **Spannleiste zur Verwendung in einer Einspannvorrichtung für auf einer Werkzeugmaschine zu bearbeitende Werkstücke**
Clamping bar for use in a clamping device for workpieces destined to be processed on a machine-tool
Barre de serrage utilisable à un dispositif d'abloquage pour pièces devant être usinées sur une machine-outil

(30) Priorität: 10.06.1989 DE 3919078
(43) Veröffentlichungstag der Anmeldung: 25.08.1993
(62) Teilanmeldung aus: 90810401.1
(73) Patentinhaber: Erowa AG, CH-5734 Reinach (CH)
(72) Erfinder: Schneider, Rudolf, CH-6362 Stansstad (CH)
(74) Vertreter: Rottmann, Maximilian R.

(56) Entgegenhaltungen:
- CH-A- 467 647
- DD-A- 215 729

## Beschreibung

Die vorliegende Erfindung betrifft eine Spannleiste zur Verwendung in einer Einspannvorrichtung für auf einer Werkzeugmaschine zu bearbeitende Werkstücke nach dem Oberbegriff des Patentanspruches 1.

Wenn ein Werkstück mittels einer Werkzeugmaschine zu bearbeiten ist, muss dieses irgendwie auf dem Arbeitstisch bzw. im Arbeitsbereich der Werkzeugmaschine festgehalten werden. Bekannt ist, den Maschinentisch mit hinterschnittenen Nuten zu versehen, in welchen Klemmbolzen verschiebbar geführt sind. Mittels letzterer und mit Hilfe von bügelartigen Halteelementen kann ein Werkstück am Maschinentisch festgeklemmt werden. Diese Methode ist umständlich und zeitraubend und oftmals für kleine Werkstücke ungeeignet.

Weiter sind Einspannvorrichtungen bekannt, die einen Rahmen aufweisen, der mit Klemmorganen versehen ist. Bei einer aus der CH-A-467 647 bekannten Ausführung ist eine Rahmenseite als feste Klemmbacke ausgebildet und innerhalb des Rahmens ist eine verschiebbare Klemmbacke geführt, welche unter Wirkung einer oder mehrerer Spannschrauben, Spindeln oder dgl. steht. Damit kann das Werkstück zwischen fester und beweglicher Klemmbacke eingespannt werden. Der Nachteil einer solchen Einspannvorrichtung ist, dass nur ein einziges Werkstück oder aber mehrere identische Werkstücke exakt gleicher Grösse eingespannt werden können. Ein weiterer Nachteil ist, dass ein derartiger Rahmen, wenn er für die Einspannung von grossen oder einer Vielzahl kleiner Werkstücke verwendet werden soll, entweder zu nachgiebig ist, da er sich während des Klemmens elastisch verformt, oder aber ausserordentlich schwer und unhandlich wird, wenn er genügend steif ausgebildet werden soll. In vielen Anwendungsfällen, namentlich bei der Bearbeitung eines Werkstückes durch Drahterosion, ist es zwingend erforderlich, den Rahmen offen zu gestalten. Diese Forderung erschwert es zusätzlich, den Rahmen bei vertretbarem Gewicht genügend stabil zu konstruieren.

Es ist die Aufgabe der vorliegenden Erfindung, eine Spannleiste zur Verwendung mit einem Einspannrahmen der eingangs erwähnten Art so auszubilden, dass die Einspannvorrichtung relativ leicht und handlich gehalten werden kann, dennoch aber eine ausserordentlich grosse Widerstandsfähigkeit gegen elastische Verformung während des Klemmvorgangs besitzt, und mit der wahlweise einzelne grössere, sogar unregelmässig geformte Werkstücke oder eine Vielzahl kleinerer Werkstücke, auch mit unterschiedlichen Abmessungen, sicher und präzise eingespannt werden können.

Gemäss der Erfindung wird dies durch die Merkmale im Kennzeichen des Anspruchs 1 erreicht.

Diese Konstruktion erlaubt das Einspannen von Werkstücken zwischen zwei Spannleisten, die grob auf das gewünschte Abstandsmass, d.h. auf die Breite oder Länge des einzuspannenden Werkstückes, eingestellt und provisorisch beiderends an den Rahmenseiten befestigt werden. Die eigentliche Klemmung des oder der Werkstücke(s) erfolgt dabei mit Hilfe zweier Spannleisten an der optimal dafür geeigneten Stelle des Rahmens, so dass der Tragrahmen von jeglichen Klemmkräften befreit ist.

Die Gewindebohrungen können dabei drei Funktionen übernehmen:
1. Um ein Durchbiegen der Spannleisten zu vermeiden, können jeweils die beiden unmittelbar neben dem Werkstück verlaufenden Bohrungen von zwei beidseitig des Werkstücks angeordneten Spannleisten mit einem durchgehenden Schraubenbolzen versehen werden, der lose in die fluchtenden Bohrungen eingesteckt und mit einer Mutter gesichert wird.
2. Einzelne der Bohrungen können mit Madenschrauben versehen werden, die dann gegen das Werkstück verspannt werden. Dies erlaubt insbesondere das Einspannen von unregelmässig geformten oder nicht masshaltigen Werkstücken.
3. Einzelne der Bohrungen können mit zylindrischen Anschlagstäben versehen werden, auf welchen das Werkstück auf- oder anliegt; dies ist insbesondere dann vorteilhaft, wenn nacheinander eine Mehrzahl von gleichen Werkstücken in der gleichen Lage im Rahmen eingespannt werden müssen.

Weiterbildungen des Erfindungsgegenstandes sowie bevorzugte Ausführungsformen gehen aus den abhängigen Ansprüchen 2-9 hervor.

Im folgenden werden Ausführungsbeispiele einer erfindungsgemässen Spannleiste anhand einer dafür geeigneten Einspannvorrichtung, unter Bezugnahme auf die beiliegenden Zeichnungen, näher erläutert. In den Zeichnungen zeigen:
- Fig. 1: eine Ansicht eines ersten Ausführungsbeispiel eines Spannrahmens, in den mehrere Werkstücke eingespannt sind, von oben;
- Fig. 2: eine Seitenansicht einer Spannleiste gemäss einer ersten Ausführungsform;
- Fig. 3: eine Ansicht der Spannleiste nach Fig. 2 von unten;
- Fig. 4: einen Teilschnitt durch die Spannleiste entlang der Linie IV-IV in Fig. 2;
- Fig. 5: eine Ansicht eines zweiten Ausführungsbeispiel eines Spannrahmens, in den mehrere Werkstücke eingespannt sind, von oben;
- Fig. 6: eine Seitenansicht einer Spannleiste gemäss einer zweiten Ausführungsform;
- Fig. 7: eine Ansicht der Spannleiste nach Fig. 6 von unten; und

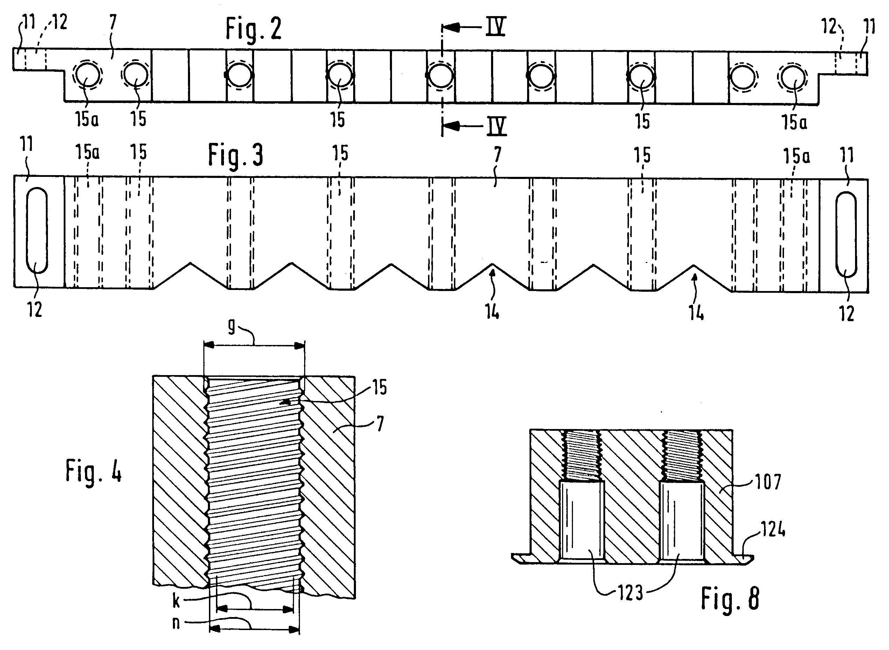

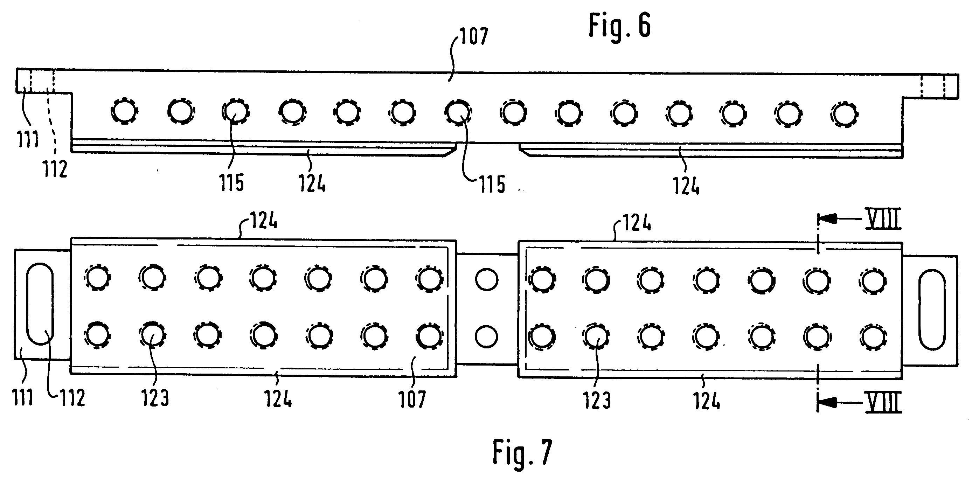

- Fig. 4: einen Teilschnitt durch die Spannleiste nach Fig. 6 entlang der Linie VIII-VIII in Fig. 7.

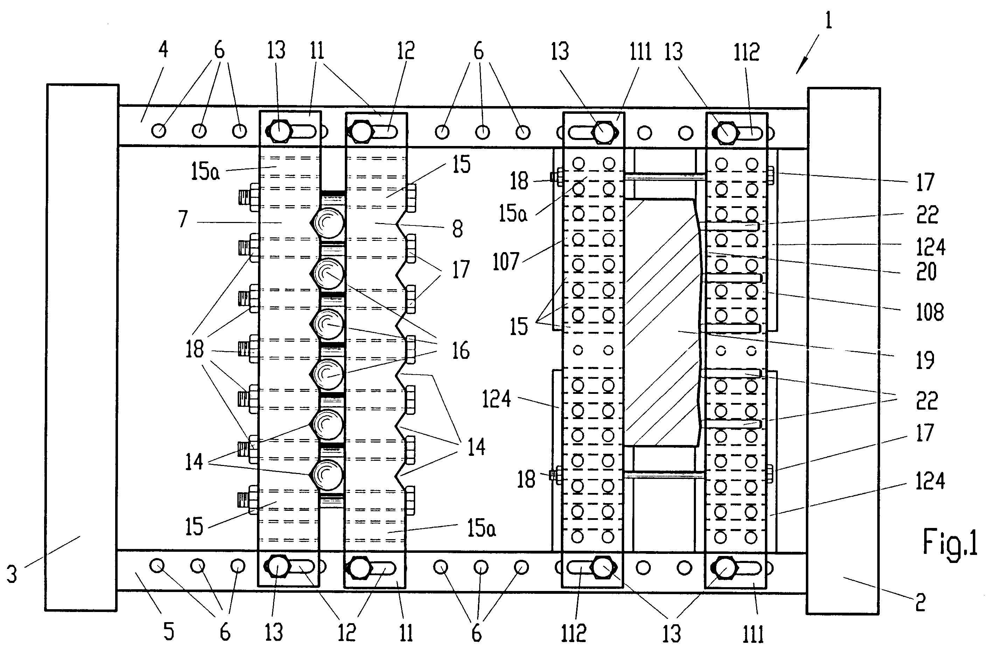

Gemäss der schematischen Darstellung von Fig. 1 ist ein generell mit 1 bezeichneter Tragrahmen vorgesehen, der mit nicht näher bezeichneten Mitteln auf dem Arbeitstisch (nicht dargestellt) einer Werkzeugmaschine befestigt werden kann. Der Rahmen 1 weist zwei Querträger 2 und 3 sowie zwei Längsträger 4 und 5 auf, die zu einer rechteckigen, starren Struktur zusammengesetzt sind. Die beiden Längsträger 4 und 5 sind mit senkrecht zur Rahmenebene verlaufenden Gewindebohrungen 6 ausgestattet, die in je einer Reihe in Längserstreckung der Längsträger 4 und 5 mit gleichem Abstand untereinander angeordnet sind.

Im Beispielsfall ist der Rahmen 1 mit einem ersten Paar von Spannleisten 7, 8 und einem zweiten Paar von Spannleisten 107, 108 ausgestattet. Deren Ausbildung geht deutlich hervor aus den Fig. 2-4, wo die Spannleiste 7 in einer Seitenansicht, in einer Ansicht von unten und in einem Teilschnitt bzw. aus den Fig. 6-8, wo die Spannleiste 107 ebenfalls in einer Seitenansicht, in einer Ansicht von unten und in einer Schnittansicht dargestellt ist. Es versteht sich, dass die Spannleiste 8 gleich wie die Spannleiste 7 und die Spannleiste 108 gleich wie die Spannleiste 107 ausgebildet sein kann.

Die Spannleiste 7 wird durch ein längliches Stahlelement mit rechteckigem Querschnitt gebildet. An beiden Enden besitzt die Spannleiste 7 je einen abgeflachten Fortsatz 11. Die Länge der Spannleiste 7 ohne die Fortsätze 11 entspricht der lichten Breite des Rahmens 1 zwischen den beiden Längsträgern 4 und 5 gemessen. Die Abmessungen der Fortsätze 11 sind so bemessen, dass sie die mit den Gewindebohrungen 6 versehenen Oberseiten der Längsträger 4 und 5 zumindest teilweise überdecken und auf diesen aufliegen.

Die Fortsätze 11 sind mit quer zur Spannleiste 7 verlaufenden, länglichen Schlitzen 12 versehen, die so angeordnet sind, dass sie bei in den Rahmen 1 eingesetzter Spannleiste 7 über den Gewindebohrungen 6 liegen und diese freigeben. Die Länge der Schlitze 12 beträgt etwas mehr als der gegenseitige Abstand der Gewindebohrungen 6, so dass jede Spannleiste 7 bzw. 8 an beliebiger Stelle innerhalb des Rahmens 1, parallel zu den Querträgern 2 und 3 verlaufend, eingesetzt werden kann. Wie aus der Fig. 1 ersichtlich sind Schrauben 13 vorgesehen, die die Schlitze 12 durchgreifen und die in die Gewindebohrungen 6 eingeschraubt sind, um die Spannleisten in ihrer Lage festzuhalten.

Die eine Längsstirnkante der Spannleiste 7 ist mit einer Mehrzahl von gleich beabstandeten, prismatischen Ausnehmungen 14 versehen. Zwischen den Ausnehmungen 14 ist ein schmaler, ebener Bereich der Längsstirnkante vorgesehen. Ferner ist die Spannleiste 7 mit einer Mehrzahl von in der Rahmenebene verlaufenden, quer zur Längserstreckungsrichtung der Spannleiste 7 verlaufenden Bohrungen 15 versehen. Diese liegen jeweils im schmalen ebenen Bereich der Längsstirnkante der Spannleiste 7, zwischen den prismatischen Ausnehmungen. Ausserdem können noch weitere Bohrungen 15a im Bereich der Spannleistenenden vorhanden sein.

Die Ausbildung der Bohrungen 15 bzw. 15a ist aus dem Schnitt in Fig. 4 ersichtlich. An sich handelt es sich um Gewindebohrungen, die jedoch auf ein bestimmtes Nennmass n aufgeweitet sind. Vorzugsweise liegt dieses Nennmass ungefähr zwischen dem Kernlochdurchmesser k und dem Gewindenenndurchmesser g. Im Beispielsfall ist die Gewindebohrung 15 bzw. 15a mit einem metrischen M 10-Gewinde versehen, dessen Gewindenenndurchmesser 10 mm beträgt. Der Kernlochdurchmesser eines M 10-Gewindes beträgt etwa 8.2 mm. Somit beträgt der Nenndurchmesser n, auf den die Gewindebohrungen 15 bzw. 15a aufgeweitet sind, 9 mm.

Diese Ausbildung gestattet es, die Bohrungen 15 bzw. 15a dreifach zu nutzen: Erstens können M 10-Schrauben oder Gewindebolzen eingeschraubt werden, zweitens können runde Stäbe mit einem Durchmesser von 9 mm durchgesteckt werden und sind sicher und weitgehend spielfrei in der Bohrung 15 bzw 15a geführt, und drittens können M 8-Schrauben oder Schraubenbolzen hindurchgesteckt werden.

Zurückkommend auf Fig. 1 wird im folgenden der Vorteil dieser Ausbildung erläutert. Als Beispiel sollen sechs zylindrische Werkstücke 16 mit ihrer Achse quer zur Rahmenebene verlaufend in den Rahmen 1 eingespannt werden. Dazu werden die beiden Spannleisten 7 und 8 in der gezeigten Ausrichtung verwendet. Die Werkstücke 16 liegen dabei jeweils in den prismatischen Ausnehmungen 14 und sind somit gleich beabstandet. Die Spannleiste 7 kann mittels der Schrauben 13 am Rahmen 1 in einer gewünschten Position festgeschraubt werden. Dann wird die Spannleiste 8 in den Rahmen 1 eingelegt, bis zur Anlage an die Werkstücke 16 an diese herangeschoben und mittels der Schrauben 13 leicht an den beiden Längsträgern 4 und 5 fixiert.

Nun werden durch jeweils alle fluchtenden Bohrungspaare 15 der beiden Leisten 7 und 8 M 8-Schraubenbolzen 17 hindurchgesteckt und je mit einer Mutter 18 versehen. Die letzteren werden nun der Reihe nach gleichmässig angezogen, so dass die Spannleiste 8, die ja nur leicht an den Rahmenseiten 4 und 5 fixiert ist, gegen die Werkstücke 16 gezogen wird und diese festklemmt. Schliesslich können die beiden Schrauben 13 der Spannleiste 8 ebenfalls festgezogen werden.

Durch die Tatsache, dass beidseitig direkt neben jedem Werkstück 16 ein Schraubenbolzen 17 vorgesehen ist, wird jede elastische Deformation der Spannleisten 7 und 8 beim Klemmvorgang vermieden und alle Werkstücke 16 werden sicher eingespannt.

Als zweites Beispiel soll ein kubisches Werkstück 19 eingespannt werden, dessen eine Oberfläche 20 uneben bzw. von unbestimmter Form ist. Dazu wird die Spannleiste 107 in den Rahmen 1 an geeigneter Stelle eingesetzt und mittels der beiden Schrauben 13 an den beiden Längsträgern 4 und 5 festgeschraubt. Dann wird eine zweite Spannleiste 108 in einem Abstand zur Spannleiste 107 lose eingelegt, der etwas grösser ist als die massgebliche Breite des Werkstückes 19.

Nun kann das Werkstück 19 zwischen den beiden Leisten 9 und 10 auf Auflageleisten 124 aufgelegt werden, - auf deren Anordnung und Ausbildung wird weiter unten noch eingegangen werden -, wodurch seine Höhenlage und die parallele Ausrichtung zur Rahmenebene festgelegt sind. Anschliessend wird die Spannleiste 108 bis auf einen geringen Betrag gegen die Oberfläche 20 des Werkstückes 19 hin verschoben und mittels der beiden Schrauben 13 an den Längsträgern 4 und 5 des Rahmens 1 leicht fixiert. Darauf werden in die beiden den Enden des Werkstückes 19 am nächsten liegenden Bohrungspaare 15 bzw. 15a der beiden Leisten 107 und 108 M 8-Schraubenbolzen 17 hindurchgesteckt, und je eine Mutter 18 wird von Hand soweit angezogen, dass sie gerade an der Seitenfläche der Spannleiste 107 anliegt. Nun werden in die drei verbleibenden, im Bereich der Werkstückoberfläche 20 mündenden Bohrungen 15 der Spannleiste 108 M 10-Madenschrauben 22 eingeschraubt und festgezogen, so dass das Werkstück zwischen den Madenschrauben 22 und der Spannleiste 107 festgeklemmt wird. Schliesslich können auch die Befestigungsschrauben 13 der Spannleiste 108 festgezogen werden.

Auch hier ergibt sich der Vorteil, dass die Schraubenbolzen 17 sehr nahe neben den Werkstückenden angeordnet werden können, so dass eine eventuelle elastische Verformung der Spannleisten 107 und 108 beim Klemmvorgang sehr gering bleibt.

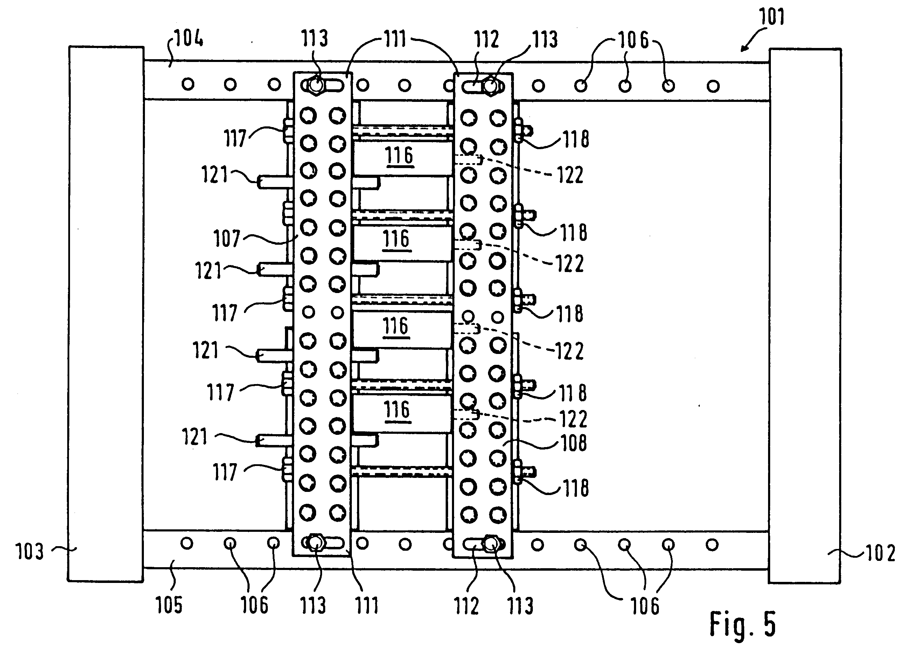

Gemäss der schematischen Darstellung von Fig. 5 ist ein generell mit 101 bezeichneter Tragrahmen vorgesehen, der mit nicht näher bezeichneten Mitteln auf dem Arbeitstisch (nicht dargestellt) einer Werkzeugmaschine befestigt werden kann. Der Rahmen 101 weist zwei Querträger 102 und 103 sowie zwei Längsträger 104 und 105 auf, die zu einer rechteckigen, starren Struktur zusammengesetzt sind. Die beiden Längsträger 104 und 105 sind mit senkrecht zur Rahmenebene verlaufenden Gewindebohrungen 106 ausgestattet, die in je einer Reihe in Längserstreckung der Längsträger 104 und 105 mit gleichem Abstand untereinander angeordnet sind.

Im Beispielsfall ist der Rahmen 101 mit zwei identisch ausgebildeten Spannleisten 107 und 108 ausgestattet. Deren Ausbildung geht deutlich aus den Fig. 6-8 hervor, wo die Spannleiste 107 in einer Seitenansicht, in einer Ansicht von unten und in einem Querschnitt dargestellt ist. Die Spannleiste 107 wird durch ein längliches Stahlelement mit rechteckigem Querschnitt gebildet. An beiden Enden besitzt die Spannleiste 107 je einen abgeflachten Fortsatz 111. Die Länge der Spannleiste 107 ohne die Fortsätze 111 entspricht der lichten Breite des Rahmens 101 zwischen den beiden Längsträgern 104 und 105 gemessen. Die Abmessungen der Fortsätze 111 sind so bemessen, dass sie die mit den Gewindebohrungen 106 versehenen Oberseiten der Längsträger 104 und 105 zumindest teilweise überdecken und auf diesen aufliegen.

Die Fortsätze 111 sind mit quer zur Spannleiste 107 verlaufenden, länglichen Schlitzen 112 versehen, die so angeordnet sind, dass sie bei in den Rahmen 101 eingesetzter Spannleiste 107 über den Gewindebohrungen 106 liegen und diese freigeben. Die Länge der Schlitze 112 beträgt etwas mehr als der gegenseitige Abstand der Gewindebohrungen 106, so dass jede Spannleiste 107 und 108 an beliebiger Stelle innerhalb des Rahmens 101, parallel zu den Querträgern 102 und 103 verlaufend, eingesetzt werden kann. Wie aus der Fig. 5 ersichtlich sind Schrauben 113 vorgesehen, die die Schlitze 112 durchgreifen und die in die Gewindebohrungen 106 eingeschraubt sind, um die Spannleisten in ihrer Lage festzuhalten.

Die Spannleiste 107 ist mit einer Mehrzahl von in der Rahmenebene verlaufenden, quer zur Längserstreckungsrichtung der Spannleiste 107 verlaufenden Bohrungen 115 versehen. Diese liegen jeweils im schmalen ebenen Bereich der Längsstirnkante der Spannleiste 107 und weisen gleichmässigen Abstand untereinander auf. Ausserdem sind noch weitere Bohrungen 123 vorhanden, die quer zu den Bohrungen 115 und zwischen diesen verlaufend in senkrecht zum Rahmen verlaufenden Ebenen angeordnet sind. Die Bohrungen 123, deren genaue Ausbildung aus dem Schnitt in Fig. 8 ersichtlich ist, weisen ein normales Gewinde auf und dienen zur Aufnahme von Klemmbügeln (nicht dargestellt). Schliesslich ist die Spannleiste 107 mit entlang benachbarter Längskanten verlaufenden Auflageleisten 124 versehen.

Bezüglich der Ausbildung der Bohrungen 115 gilt das gleiche wie für die Bohrungen 15 in der Spannleiste 7; es wird hierzu auf die Erläuterungen im Zusammenhang mit Fig. 4 verwiesen, welche sinngemäss Geltung besitzen.

Zurückkommend auf Fig. 5 wird im folgenden der Vorteil dieser zweiten Ausbildung erläutert. Als Beispiel sollen vier kubische Werkstücke 116 in den Rahmen 101 eingespannt werden. Dazu wird die Spannleiste 107 in den Rahmen 101 an geeigneter Stelle eingesetzt und mittels der beiden Schrauben 113 an den beiden Längsträgern 104 und 105 festgeschraubt. Dann wird eine zweite Spannleiste 108 in einem Abstand zur Spannleiste 107 lose eingelegt, der etwa gleich ist wie die massgebliche Breite der Werkstücke 116. Anschliessend werden in geeignet gelegene Bohrungen 115 der Spannleiste 107 Anschlagstäbe 121 mit einem Durchmesser von 9 mm eingeschoben, so dass sie sich etwas in den Raum zwischen den beiden Leisten 107 und 108 hinein erstrecken.

Nun können die Werkstücke 116 zwischen den beiden Leisten 107 und 108 zwischen die Anschlagstäbe 121 auf die Leisten 124 aufgelegt werden, wodurch ihre Höhenlage und der gegenseitige Abstand festgelegt sind. Anschliessend wird die Spannleiste 108 bis auf einen geringen Betrag gegen die Seitenfläche der Werkstückes 116 hin verschoben und mittels der beiden Schrauben 113 an den Längsträgern 104 und 105 des Rahmens 101 leicht fixiert. Darauf werden in jeweils die den Enden der Werkstücke 116 am nächsten liegenden Bohrungspaare 115 der beiden Leisten 107 und 108 M 8-Schraubenbolzen 117 hindurchgesteckt, und je eine Mutter 118 wird von Hand soweit angezogen, dass sie gerade an der Seitenfläche der Spannleiste 108 anliegt. Nun werden in vier geeignete, im Bereich der Werkstückseitenflächen mündende Bohrungen 115 der Spannleiste 108 M 10-Madenschrauben 122 eingeschraubt und festgezogen, so dass jedes Werkstück 116 zwischen den Madenschrauben 122 und der Spannleiste 107 festgeklemmt wird. Schliesslich können auch die Befestigungsschrauben 113 der Spannleiste 108 festgezogen werden.

Auch hier ergibt sich der Vorteil, dass die Schraubenbolzen 117 sehr nahe neben den Werkstückenden angeordnet werden können, so dass eine eventuelle elastische Verformung der Spannleisten 107 und 108 beim Klemmvorgang sehr gering bleibt.

Es versteht sich, dass in entsprechender Weise mehrere kleinere Werkstücke nebeneinander eingespannt werden können, die unterschiedliche Breiten besitzen. Der Dimensionsunterschied lässt sich leicht durch tieferes oder geringeres Einschrauben der Madenschrauben 122 ausgleichen.

Der mit den erfindungsgemässen Spannleisten versehene, fertig bestückte Einspannrahmen 1 bzw. 101 ist ausserordentlich stabil bei vergleichsweise geringem Gewicht auf Grund der Tatsache, dass die Klemmorgane (Schraubenbolzen 17 bzw. 117, Madenschrauben 22 bzw. 122) immer direkt neben oder sehr nahe am Werkstück bzw. an den Werkstücken angeordnet werden können. Dadurch können die Spannleisten vergleichsweise schmal und leicht gehalten werden. Dasselbe gilt insbesondere auch für die Rahmenträger 2, 3, 4 und 5 bzw. 102, 103, 104 und 105, da sie überhaupt keine Spannkräfte aufnehmen müssen, sondern nur die Funktion haben, die Spannleisten 7 und 8 bzw. 107 und 108 und damit die Werkstücke 16 und 19 bzw. 116 in Position zu halten. Die erfindungsgemässe Spannleiste ist auch sehr vielseitig verwendbar zum Einspannen von grossen und kleinen, einzelnen oder mehreren, unterschiedlich geformten Werkstücken, wobei nur einige wenige, untereinander gleiche Grundelemente (Spannleisten, Schraubenbolzen, Madenschrauben, Anschlagstäbe) Verwendung finden.

## Patentansprüche

1. Spannleiste zur Verwendung in einer Einspannvorrichtung für Werkstücke zu deren Bearbeitung auf einer Werkzeugmaschine, wobei die Einspannvorrichtung einen rechteckigen Rahmen (1; 101) mit zwei mit Gewindebohrungen (6; 106) versehenen Längsträgern (4, 5; 104, 105) und zwei Querträgern (2, 3; 102, 103) aufweist, dadurch gekennzeichnet, dass die Spannleiste (7, 8; 107, 108) jeweils mit ihren beiden Enden (11; 111) in Längsrichtung der Längsträger (4, 5; 104, 105) verschiebbar an diesen befestigbar ist, und dass sie eine Mehrzahl von auf ein vorbestimmtes Nennmass (n) aufgeweiteten, durchgehenden, rechtwinklig zur Erstreckungsrichtung der Spannleiste (7, 8; 107, 108) und damit im Einbauzustand der Spannleiste (7, 8; 107, 108) parallel zu den Längsträgern (4, 5; 104, 105) verlaufende Gewindebohrungen (15, 15a; 115) zum wahlweisen Einsetzen von Spannschrauben (17, 22; 117, 122) und/oder Anschlagstäben (121) aufweist.

2. Spannleiste nach Anspruch 1, dadurch gekennzeichnet, dass sie abgeflachte Endbereiche (11; 111) aufweist, welche auf die mit den Gewindebohrungen (6; 106) versehenen Rahmenseiten (4, 5; 104, 105) aufzuliegen bestimmt und die mit je einem in Rahmenseiten-Erstreckungsrichtung verlaufenden, mit den Gewindebohrungen (6; 106) koinzidierenden Schlitz (12; 112) versehen sind.

3. Spannleiste nach einem der vorangehenden Ansprüche, dadurch gekennzeichnet, dass die Gewindebohrungen (15, 15a; 115) in den Spannleisten (7, 8; 107, 108) auf ein Mass (n) aufgeweitet sind, das betragsmässig annähernd dem Mittelwert von Gewindenenndurchmesser (g) und Kernlochdurchmesser (k) entspricht.

4. Spannleiste nach einem der vorangehenden Ansprüche, dadurch gekennzeichnet, dass eine Längsstirnfläche der Spannleiste (7, 8) mit einer Mehrzahl von prismatischen Vertiefungen (14) versehen ist.

5. Spannleiste nach den Ansprüchen 1 und 4 oder 3 und 4, dadurch gekennzeichnet, dass einzelne Gewindebohrungen (15) der Spannleiste jeweils zwischen zwei benachbarten, prismatischen Vertiefungen (14) angeordnet sind.

6. Spannleiste nach einem der vorangehenden Ansprüche, dadurch gekennzeichnet, dass sie mit einer Mehrzahl von gleich beabstandeten, senkrecht zur Rahmenebene verlaufenden Gewindebohrungen (123) versehen ist.

7. Spannleiste nach einem der vorangehenden Ansprüche, dadurch gekennzeichnet, dass sie an zwei parallel zur Rahmenebene verlaufenden, benachbarten Kanten mit Auflageleisten (124) versehen ist.

8. Spannleiste nach einem der vorangehenden Ansprüche, dadurch gekennzeichnet, dass einzelne der Gewindebohrungen (15; 115) der Spannleiste (107, 108) mit Madenschrauben (22; 122) zum Festklemmen eines Werkstückes (19; 116) zwischen zwei Spannleisten (10e, 108) versehen sind.

9. Spannleiste nach einem der vorangehenden Ansprüche, dadurch gekennzeichnet, dass einzelne der Gewindebohrungen (15; 115) mit aus der Gewindebohrung herausragenden Anschlagstäben (121) versehen sind.

## Claims

1. A clamping bar for use in a clamping device for workpieces, for their processing on a machine tool, in which arrangement the clamping device has a rectangular frame (1; 101) with two longitudinal supports (4, 5; 104, 105) provided with tapped bores (6; 106) and two transverse supports (2, 3; 102, 103), characterized in that the clamping bar (7, 8; 107, 108) is securable with its two ends (11; 111) respectively on the longitudinal supports (4, 5; 104, 105), with scope for displacement thereon in the longitudinal direction; and that it has a plurality of through tapped bores (15, 15a; 115) widened to a predetermined nominal dimension (n), extending at right angles to the direction of reach of the clamping bar (7, 8; 107, 108), and thus in the installed state of the clamping bar (7, 8; 107, 108) parallel to the longitudinal supports (4, 5; 104, 105), for the selectable insertion of clamping screws (17, 22; 117, 122) and/or stop bars (121).

2. A clamping bar according to claim 1, characterized in that it has flattened end zones (11; 111) which are intended to bear on the frame sides (4, 5; 104, 105) provided with the tapped bores (6; 106) and which are provided with one slot (12; 112) each, extending in the direction of reach of the frame sides and coinciding with the tapped bores (6; 106).

3. A clamping bar according to one of the preceding claims, characterized in that the tapped bores (15, 15a; 115) are widened in the clamping bars (7, 8; 107, 108) to a dimension (n) which corresponds in amount approximately to the median value of the nominal tapped diameter (g) and core hole diameter (k).

4. A clamping bar according to one of the preceding claims, characterized in that a longitudinal end zone of the clamping bar (7, 8) is provided with a plurality of prismatic deepened portions (14).

5. A clamping bar according to claims 1 and 4 or 3 and 4, characterized in that individual tapped bores (15) of the clamping bar are in each case arranged between two adjoining deepened portions (14).

6. A clamping bar according to one of the preceding claims, characterized in that it is provided with a plurality of equidistant tapped bores (123) extending perpendicularly to the plane of the frame.

7. A clamping bar according to one of the preceding claims, characterized in that on two adjoining edges it is provided with bearing bars (124) extending parallel to the plane of the frame.

8. A clamping bar according to one of the preceding claims, characterized in that some of the tapped bores (15, 115) of the clamping bar (107, 108) are provided with grub screws (22; 122) for clamping a workpiece (19; 116) between two clamping bars (10e, 108).

9. A clamping bar according to one of the preceding claims, characterized in that some of the tapped bores (15; 115) are provided with stop bars (121) projecting out of the tapped bore.

## Revendications

1. Baguette de serrage pour utilisation dans un dispositif de fixation pour pièces pour leur usinage sur une machine-outil, le dispositif de fixation présentant un cadre (1 ; 101) rectangulaire avec deux longerons (4, 5 ; 104, 105) pourvus de taraudages et deux traverses (2, 3, 102, 103), caractérisée en ce que la baguette de serrage (7, 8 ; 107, 108) peut coulisser respectivement avec ses deux extrémités dans le sens longitudinal des longerons (4, 5 ; 104, 105) et peut être fixée sur ceux-ci, et en ce qu'elle présente un grand nombre de taraudages (15, 15a ; 115) élargis jusqu'à une cote nominale (n) prédéfinie, continus, perpendiculaires au sens d'étirement de la. baguette de serrage (7, 8 ; 107, 108) et donc parallèles aux longerons (4, 5 ; 104, 105) lorsque la baguette de serrage (7, 8 ; 107, 108) est montée, pour la mise en place optionnelle de vis de serrage (17, 22 ; 117, 122) et/ou de baguettes de butée (121).

2. Baguette de serrage selon la revendication 1, caractérisée en ce qu'elle présente des zones d'extrémités (11 ; 111) aplaties qui sont destinées à appuyer sur les côtés du cadre (4, 5 ; 104, 105) pourvus des taraudages (6 ; 106) et qui sont dotées chacune d'une fente (12 ; 112) allant dans le sens d'étirement du côté du cadre et coïncidant avec les taraudages (6 ; 106).

3. Baguette de serrage selon l'une quelconque des revendications précédentes, caractérisée en ce que les taraudages (15, 15a ; 115) sont élargies dans les baguettes de serrage (7, 8 ; 107, 108) jusqu'à une cote qui correspond en valeur approximativement à la moyenne du diamètre nominal du filetage (g) et du diamètre du trou central (k).

4. Baguette de serrage selon l'une quelconque des revendications précédentes, caractérisée en ce qu'une surface frontale longitudinale de la baguette de serrage (7, 8) est pourvue d'un grand nombre de cavités (14) prismatiques.

5. Baguette de serrage selon les revendications 1 et 4 ou 3 et 4 caractérisée en ce que les taraudages (15) individuels de la baguette de serrage sont disposés respectivement entre deux cavités (14) prismatiques voisines.

6. Baguette de serrage selon l'une quelconque des revendications précédentes, caractérisée en ce qu'elle est pourvue d'un grand nombre de taraudages (123) équidistants et perpendiculaires au plan du cadre.

7. Baguette de serrage selon l'une quelconque des revendications précédentes, caractérisée en ce qu'elle est pourvue de baguettes d'appui sur deux arêtes voisines et parallèles au plan du cadre.

8. Baguette de serrage selon l'une quelconque des revendications précédentes, caractérisée en ce que certains des taraudages (15 ; 115) de la baguette de serrage (107, 108) sont pourvus de vis sans tête (22 ; 122) pour le blocage d'une pièce (19 ; 116) entre deux baguettes de serrage (10e, 108).

9. Baguette de serrage selon l'une quelconque des revendications précédentes, caractérisée en ce que certains des taraudages (15 ; 155) sont pourvus de baguettes de butée (121) dépassant du taraudage.
